# EUROPEAN PATENT APPLICATION

(11) **EP 1 977 828 A1**
(43) Date of publication of application: **08.10.2008**
(21) Application number: 07020896.2
(22) Date of filing: 25.10.2007
(51) Int. Cl.: B01J 35/04, B01D 46/24, B28B 23/12, F01N 3/022, F01N 3/28

(54) **Catalyst carrier and exhaust-gas treating device**

(30) Priority: 30.03.2007 WO PCT/JP2007/057253
(71) Applicant: IBIDEN CO., LTD., Ogaki-shi Gifu 503-8604 (JP)
(72) Inventor: Ido, Takahiko, Ibi-Gun Gifu 501-0695 (JP); Ohno, Kazushige, Ibi-Gun Gifu 501-0695 (JP)
(74) Representative: HOFFMANN EITLE

(57) **Abstract**

The invention provides a catalyst carrier including a honeycomb structure having two end faces and a peripheral portion connecting the end faces to each other and in which cells extending between the end faces are separated by cell walls. The catalyst carrier includes a coated layer which is disposed on the peripheral portion throughout a full length of the honeycomb structure. A reinforcing member is disposed on the peripheral portion of the honeycomb structure, wherein the reinforcing member has two reinforcing rings, the reinforcing rings being disposed to surround the periphery of each of the end faces of the honeycomb structure respectively.

## Description

### TECHNICAL FIELD

This invention relates to a catalyst carrier and an exhaust-gas treating device including a catalyst carrier.

### BACKGROUND ART

Conventionally, various exhaust-gas treating devices are proposed for use in internal combustion engines such as automotive vehicles and construction machinery and put in practical use. An exhaust-gas treating device generally is constructed so that a casing made of a metal or the like is disposed in an intermediate position of an exhaust pipe connected to an exhaust manifold of an engine, and a honeycomb structure is arranged within the casing. This honeycomb structure constitutes a catalyst carrier which converts harmful gas components in exhaust gas through catalytic reaction.

For example, this catalyst carrier is produced by supporting a catalyst carrying layer of y-alumina, etc. and a catalyst of platinum, etc. to cell walls of a cordierite-base honeycomb structure with low thermal expansion characteristics. Harmful gases, such as CO, HC and NOx contained in exhaust gas are converted by the catalyst provided in the cell walls.

It is necessary to increase the probability of contact between the exhaust gas and the catalyst (for example, noble metal) in the catalyst carrier having the honeycomb structure, in order to improve the conversion performance of exhaust gas. The honeycomb structure in which the specific surface area is increased by including an increased specific-surface-area material (for example, alumina) and inorganic fibers is known as a catalyst carrier adapted for obviating this problem. For example, refer to the following patent documents 1 and 2.
Patent Document 1: Japanese Laid-Open Patent Application No. 2005-218935
Patent Document 2: Japanese Laid-Open Patent Application No. 2005-349378

### DISCLOSURE OF THE INVENTION

### PROBLEM TO BE SOLVED BY THE INVENTION

As mentioned above, from a viewpoint of the conversion performance of exhaust gas using the catalyst carrier, it is preferred that the specific surface area of the honeycomb structure is as large as possible. However, if the specific surface area of the honeycomb structure is raised as disclosed in Japanese Laid-Open Patent Application No. 2005-218935 and Japanese Laid-Open Patent Application No. 2005-349378, sintering the base material sufficiently is difficult. In many cases, the strength of the catalyst carrier after manufacture falls.

If the strength of the catalyst carrier falls, there is a possibility that the catalyst carrier may be damaged by the stress which is exerted from the side of the peripheral portion (or the inside of the casing) at the time of mounting of the catalyst carrier to the casing or in the actual use.

According to one aspect of the invention, there is provided a catalyst carrier which has an increased isostatic strength.

### MEANS FOR SOLVING THE PROBLEM

In order to achieve the above-mentioned aspect, the invention provides a catalyst carrier including a honeycomb structure having two end faces and a peripheral portion connecting the end faces to each other and in which cells extending between the end faces are separated by cell walls, the catalyst carrier comprising: a coated layer disposed on the peripheral portion throughout a full length of the honeycomb structure; and a reinforcing member disposed on the peripheral portion of the honeycomb structure, wherein the reinforcing member has two reinforcing rings, the reinforcing rings being disposed to surround the periphery of each of the end faces of the honeycomb structure respectively.

According to this catalyst carrier, the reinforcing member is disposed around the periphery of the end faces of the honeycomb structure where the largest strain to the applied stress takes place if it is exerted from the peripheral portion of the catalyst carrier, the strength to the stress from the peripheral portion can be raised.

The above-mentioned catalyst carrier may be configured so that the honeycomb structure contains inorganic particles and further contains inorganic fibers and/or whiskers.

The above-mentioned catalyst carrier may be configured so that a ratio of a width of each reinforcing ring to the full length of the honeycomb structure is in a range of 5% to 25%.

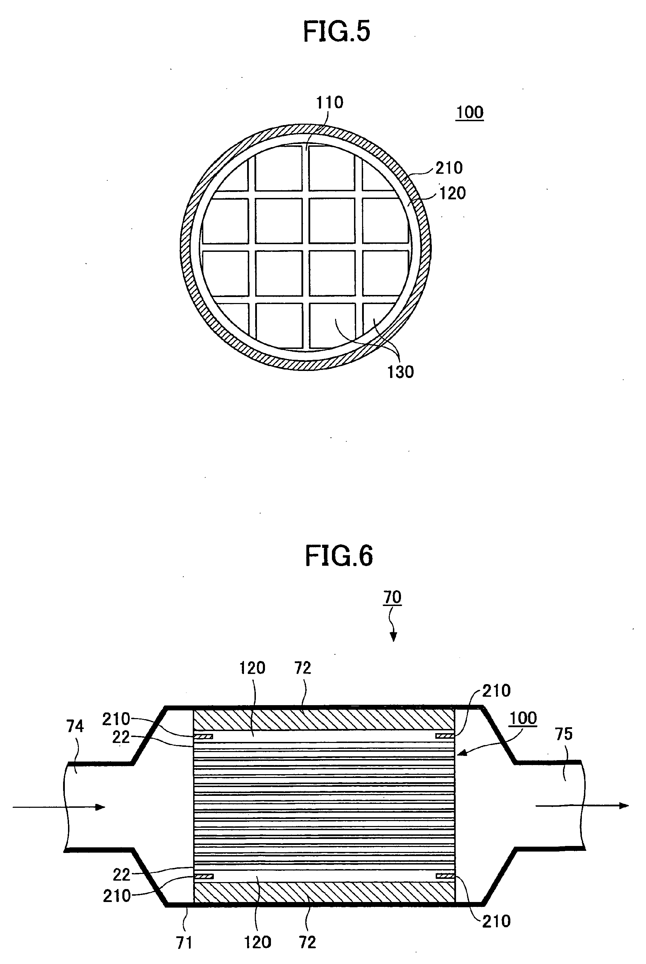

Specifically, if the ratio of the reinforcing member width is in a range of 5% to 25%, the strength to the stress from the peripheral portion can be raised (refer to FIG. 6). If the percentage of the reinforcing ring width is less than 5%, obtaining the above-mentioned effect will be difficult. If it exceeds 25%, the increasing ratio of the strength will become small, the arrangement to the coated layer will become difficult, and the manufacture will become difficult. In addition, achieving low heat capacity of the catalyst carrier will become difficult.

The above-mentioned catalyst carrier may be configured so that a thickness of each reinforcing ring is in a range of 0.3 to 2.5 mm. Specifically, if the thickness of each reinforcing ring is in a range of 0.3 to 2.5 mm, the strength to the stress from the peripheral portion can be raised (refer to FIG. 5). If the thickness of each reinforcing ring is less than 0.3 mm, obtaining the above-mentioned effect will be difficult. If it exceeds 2.5 mm, the increasing ratio of the strength will become small, the arrangement to the coated layer will become difficult, and the manufacture will become difficult. In addition, achieving low heat capacity of the catalyst carrier will become difficult.

The above-mentioned catalyst carrier may be configured so that each reinforcing ring is made of either a stainless steel or a nickel base alloy.

The above-mentioned catalyst carrier may be configured so that a sum of a thickness of the coated layer and a thickness of each reinforcing ring is substantially uniform in the longitudinal direction of the honeycomb structure.

The above-mentioned catalyst carrier may be configured so that a thickness of each cell wall is in a range of 0.1 to 0.4 mm.

The above-mentioned catalyst carrier may be configured so that a specific surface area of the honeycomb structure is in a range of 25000 to 70000 m²/L per unit volume of the catalyst carrier.

The above-mentioned catalyst carrier may be configured so that the honeycomb structure includes a plurality of honeycomb units and a plurality of adhesive layers joining the plurality of honeycomb units respectively.

The plurality of honeycomb units are joined together by interposing the plurality of adhesive layers, and the thermal shock resistance can be increased. It is estimated that the reason this effect can be obtained is that the absolute expansion amount of the material is reduced, and if a temperature distribution occurs on the catalyst carrier by a rapid temperature change, the stress occurring on the honeycomb units can be reduced due to the joining of the honeycomb units. Or it is estimated that the reason is that a thermal shock can be eased by the adhesive layers.

Even if a crack arises in the honeycomb units by a thermal stress, the adhesive layers prevent the crack from extending over the entire catalyst carrier. The adhesive layers serve as a frame of the catalyst carrier, and have a role of maintaining the form of the catalyst carrier.

The above-mentioned catalyst carrier may be configured so that the catalyst carrier has a catalyst of a noble metal supported therein.

The above-mentioned catalyst carrier may be configured so that the reinforcing rings are disposed in any of positions inside the coated layer, internal positions of the coated layer, and positions outside the coated layer.

Moreover, in order to achieve the above-mentioned object, the invention provides an exhaust-gas treating device comprising: the above-mentioned catalyst carrier; a holding seal material which is wound around the catalyst carrier; and a casing in which the catalyst carrier around which the holding seal material is wound is accommodated.

Since the catalyst carrier of the invention has the effects mentioned above, the catalyst carrier of the invention is useful and effective when it is applied to the exhaust-gas treating device in which the catalyst carrier may receive stress from the casing and the holding seal material.

### EFFECTS OF THE INVENTION

According to the invention, the coated layer of the honeycomb structure is constituted as mentioned above, and it is possible to provide a catalyst carrier having an increased isostatic strength.

### BRIEF DESCRIPTION OF THE DRAWINGS

FIG. 1 is a perspective view showing an example of a catalyst carrier of the invention.
FIG. 2 is a perspective view showing an example of a honeycomb unit which constitutes a basic unit of the catalyst carrier of FIG. 1.
FIG. 3 is a cross-sectional view of the catalyst carrier taken along the line A-A indicated in FIG. 1.
FIG. 4 is a diagram showing another example of the catalyst carrier of the invention when viewed from the end face side.
FIG. 5 is a diagram showing another example of the catalyst carrier of the invention when viewed from the end face side.
FIG. 6 is a cross-sectional view showing the composition of an exhaust-gas treating device including the catalyst carrier of the invention.
FIG. 7 is a perspective view of a honeycomb structure manufactured by another manufacturing method.
FIG. 8 is a diagram for explaining the relationship between the isostatic strength and the thickness of the reinforcing ring when the ratio of the width of the reinforcing ring to the full length of the catalyst carrier is constant (= 6.7%).

FIG. 9 is a diagram for explaining the relationship between the isostatic strength and the ratio of the width of the reinforcing ring to the full length of the catalyst carrier when the thickness of the reinforcing ring is constant (= 0.5 mm).

### DESCRIPTION OF REFERENCE NUMERALS

- 22: cell
- 23: cell wall
- 70: exhaust-gas treating device
- 71: casing
- 72: holding seal material
- 74: introducing pipe
- 75: exhaust pipe
- 100: catalyst carrier
- 110: adhesive layer
- 120: coated layer
- 130: honeycomb unit
- 140: honeycomb structure
- 210, 220: reinforcing ring

### BEST MODE FOR CARRYING OUT THE INVENTION

A description will now be given of embodiments of the invention with reference to the accompanying drawings.

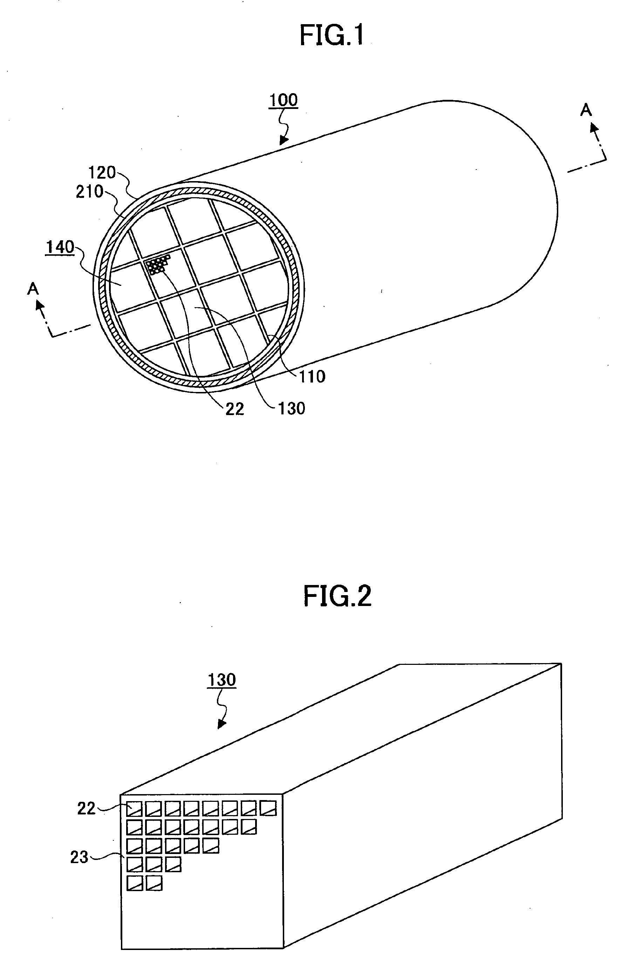

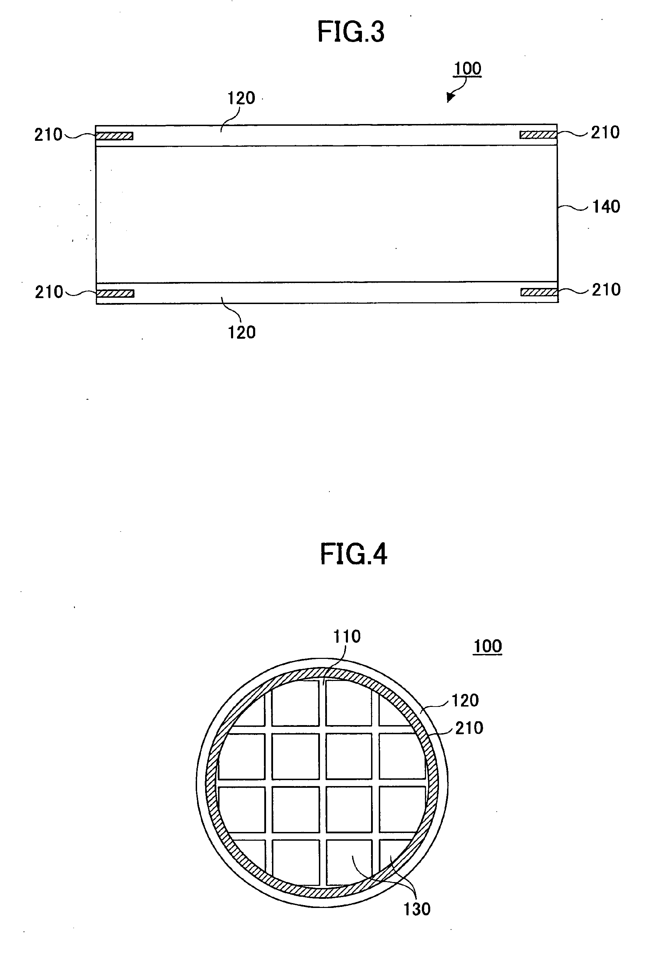

FIG. 1 shows an example of a catalyst carrier according to the invention. FIG. 2 shows showing an example of a honeycomb unit which constitutes a basic unit of the catalyst carrier of FIG. 1. FIG. 3 is a cross-sectional view of the catalyst carrier taken along the line A-A indicated in FIG. 1.

As shown in FIG. 1, the catalyst carrier 100 includes a honeycomb structure 140 having two open end faces and a peripheral portion connecting the open end faces to each other, and a coated layer 120 disposed on the peripheral portion of the honeycomb structure 140.

The coated layer 120 is usually disposed throughout the length of the honeycomb structure 140 for the purpose of adjusting the peripheral form of the catalyst carrier 100 after manufacture. The coated layer 120 is usually made of a ceramic material, such as alumina.

For example, the honeycomb structure 140 is formed by joining together a plurality of pillar-shaped honeycomb units 130 made of a ceramic material as shown in FIG. 2, by interposing adhesive layers 110 (in the example of FIG. 1, a total of 16 honeycomb units in four rows and four columns) and cutting the peripheral surface into a predetermined form (in the example of FIG. 1, a cylindrical form).

As shown in FIG. 2, the honeycomb unit 130 is extended in the longitudinal direction, and this honeycomb unit includes a plurality of cells 22 each having open end faces at its ends, and a plurality of cell walls 23 separating the plurality of cells respectively.

For example, the catalyst which is made of a noble metal, such as platinum, is supported by the cell walls 23. Therefore, when the catalyst carrier is actually used, the exhaust gas flows into the cells 22 of any of the honeycomb units 130 from one of the end faces thereof and comes in contact with the catalyst when it passes the cells. Thereby, the harmful components (for example, CO, HC, and NOx) contained in the exhaust gas are converted by the catalyst. The converted exhaust gas is discharged from the other end faces of the cells 22.

The catalyst carrier 100 of the invention is characterized in that a reinforcing ring 210 is disposed in the peripheral portion of the honeycomb structure 140, in addition to the coated layer 120.

For example, in the case of the catalyst carrier of FIG. 1, two reinforcing rings 210 are provided in the coated layer 120 as shown in FIG. 3, so that the reinforcing rings 210 are disposed in the coated layer so as to surround the peripheral portion at the end faces of the honeycomb structure 140.

It should be noted that the internal structure of the honeycomb structure 140 (including the adhesive layers 110, the cells 22, the cell walls 23, the catalyst, etc.) is not illustrated in FIG. 3 for the sake of clarification.

Disposing the reinforcing rings 210 in the peripheral surface of the honeycomb structure 140 makes it possible that, while the specific surface area of the honeycomb structure is maintained at the value that is equal to or larger than that in the related art, the isostatic strength of the catalyst carrier 100 be increased.

However, in many cases, the peripheral portion of the catalyst carrier 100 at its end face is most likely to be damaged, i.e., the peripheral portion is the part where the largest distortion to stress is likely to take place. If the reinforcing rings are disposed at least in the positions corresponding to both the end faces of the honeycomb structure 140 in the peripheral portion thereof as shown in FIG. 3, it is possible to attain the improvement in the isostatic strength of the catalyst carrier.

It is preferred that the ratio of the width of each reinforcing ring 210 (which width is the length along the longitudinal direction of the honeycomb structure) to the full length of the honeycomb structure is in a range of 5% to 25%.

Although the thickness of each reinforcing ring 210 varies depending on the source material of the reinforcing ring, it is preferred that the thickness of each reinforcing ring is in a range,of 0.3 to 2.5 mm, for example.

In the catalyst carrier 100 of FIG. 3, the reinforcing rings 210 are disposed in the state where they are inserted in the inside of the coated layer 120. However, the positional relationship between the coated layer and the reinforcing rings according to the invention is not restricted to such composition.

For example, in an alternative embodiment, as shown in FIG. 4, the reinforcing rings 210 may be directly disposed on the peripheral portion of the honeycomb structure 140 and the coated layer 120 may be disposed on the reinforcing rings 210. Alternatively, as shown in FIG. 5, the reinforcing rings 210 may be disposed in positions outside the coated layer 120.

The source material of the reinforcing rings is not restricted to the above-mentioned embodiment if it provides a sufficiently increased strength in the actual service temperature range (about 1000 degrees C) of the catalyst carrier 100. Examples of the source material of the reinforcing rings that can be used may include metallic materials and inorganic materials having a strength larger than that of the coated layer.

Among the metallic materials, a stainless steel and a nickel base alloy are desirable. Examples of the stainless steel include a martensite-base stainless steel and a ferrite-base stainless steel of chromium-base stainless steels, an austenite-base stainless steel of nickel-base stainless steels and the like. Specifically, the examples may include SUS304, SUS430, SUS410, SUS316L, SUS310S and the like.

A nickel-base alloy is also called a nickel base super alloy, and it means that the nickel-base alloy is inclusive of nickel and nickel-base alloys. Examples of components other than nickel of the nickel base alloys may include Cr, Co, Mo, W, Nb, Al, Ti, Fe, C, B, Zr, Ta, V, Mn, Si, Y₂O₃, etc.

In the catalyst carrier according to the invention, the specific surface area of the honeycomb structure is not restricted to the above-mentioned embodiment. However, it is preferred that the specific surface area of the honeycomb structure is in a range of 25000 to 70000 m²/L per unit volume of the catalyst carrier.

This is because the isostatic strength of the catalyst carrier of the invention is increased from the level of a honeycomb structure with the equivalent specific surface area. The specific surface area of the honeycomb structure is given as a value measured in conformity with the Japanese Industrial Standard JIS R-1626 (1996). The measurement is carried out by the one-point method of the standard using a cylindrical sample having a diameter of 15 mm and a height of 15 mm.

The catalyst carrier according to the invention can be used in an exhaust-gas treating device of an automotive vehicle, for example.

FIG. 6 shows the composition of an exhaust-gas treating device 70 which includes a catalyst carrier 100 of the invention.

As shown in FIG. 6, the exhaust-gas treating device 70 generally includes a catalyst carrier 100, a metal casing 71 which accommodates the catalyst carrier 100, and a holding seal material 72 which is disposed between the catalyst carrier 100 and the casing 71 to hold the catalyst carrier 100 in a suitable position.

An introducing pipe 74 for introducing an exhaust gas discharged by an internal combustion engine, is connected to one end (the introductory part) of the exhaust-gas treating device 70, and an exhaust pipe 75 for discharging the exhaust gas is connected to the other end (the discharge part) of the exhaust-gas treating device 70. In FIG. 6, the arrows are indicated to show the flow of the exhaust gas.

The exhaust gas discharged by the internal combustion engine passes along the introducing pipe 74, and is introduced into the casing 71. The exhaust gas passes along the cells 22 from one end face of the catalyst carrier 100, facing the introducing pipe 74, and is circulated in the inside of the honeycomb structure 140. The exhaust gas entering the honeycomb structure 140 is subjected to the catalytic reaction with the catalyst while it passes through the cells 22, so that the harmful components, such as CO, HC and NOx, are converted. Then, the exhaust gas passes along the other-end side of the catalyst carrier 100 and is discharged from the exhaust-gas treating device 70. Finally, it is discharged through the exhaust pipe 75 to the outside.

In the exhaust-gas treating device 70, the catalyst carrier 100 includes the honeycomb structure having an increased specific surface area, and it is possible to provide effective conversion characteristics. Moreover, in the catalyst carrier 100, the reinforcing rings are disposed at least in the end face side of the honeycomb structure where a large distortion to stress may occur, and a sufficiently large strength is provided to the compressive stress exerted in the peripheral direction from the side of the casing 71 or the holding seal material 72. Therefore, it is possible for the exhaust-gas treating device 70 of the invention to avoid damaging at the time of use, although the honeycomb structure has an increased specific surface area.

In the above-mentioned catalyst carrier, the honeycomb structure in which the plurality of honeycomb units 130 are joined by interposing the adhesive layers 110 (which may be called a joint-type honeycomb structure) as shown in FIG. 1 has been explained as the basic structure. However, the present invention is not limited to the above example. Alternatively, the present invention may be also applicable to a honeycomb structure (which may be called an integral-type honeycomb structure) which is different from the above example. In such alternative embodiment, the honeycomb structure does not have any adhesive layer 110 but is produced through integral molding and the thus produced catalyst carrier may be formed as the basic structure.

Although the composition of the honeycomb units is not limited, it is desirable that the honeycomb units include inorganic particles and inorganic fibers and/or whiskers. This is because the specific surface area will be increased by the use of inorganic particles, and the strength of the honeycomb units will be increased by the use of inorganic fibers and/or whiskers.

As for the above-mentioned inorganic particles, the particles which are made of alumina, silica, zirconia, titania, seria, mullite, zeolite, etc. are desirable. These particles may be used solely and may be used in combination of two or more kinds of particles. Especially, among them, alumina particles and seria particles are more desirable.

As for the above-mentioned inorganic fibers and/or whiskers, examples of the inorganic fibers and whiskers which are made of alumina, silica, silicon carbide, silica alumina, glass, potassium titanate, aluminum borate, etc. are desirable. These may be used solely or in combination. Especially, among those inorganic fibers and/or whiskers, aluminum borate whiskers are more desirable.

The inorganic fibers or whiskers in this specification mean the substances with which the average aspect ratio (length/diameter) exceeds 5.

The desirable average aspect ratio of the above-mentioned inorganic fibers or whiskers is in a range of 10 to 1000. The minimum of the content of the inorganic particles contained in the above-mentioned honeycomb units is desirably 30% by weight, it is more desirably 40% by weight, and it is most desirably 50% by weight.

On the other hand, the maximum of the content of the inorganic particles contained in the above-mentioned honeycomb units is desirably 97% by weight, it is more desirably 90% by weight, it is still more desirably 80% by weight, and it is most desirably 75% by weight.

If the content of the inorganic particles is less than 30% by weight, the amount of the inorganic particles which contribute to the improvement in specific surface area is relatively small, the specific surface area as the honeycomb structure is too small, and when they are used to support the catalyst component, high dispersion of the catalyst component may not be provided.

On the other hand, if it exceeds 97% by weight, the amount of the inorganic fibers and/or whiskers which contribute to the improvement in strength is relatively small, and the strength of the honeycomb structure will fall.

The minimum of the total content of the inorganic fibers and/or whiskers contained in the above-mentioned honeycomb units is desirably 3% by weight, it is more desirably 5% by weight, and it is most desirably 8% by weight. On the other hand, the maximum of the total content of the inorganic fibers and/or whiskers contained in the above-mentioned honeycomb units is desirably 70% by weight, it is more desirably 50% by weight, it is still more desirably 40% by weight, and it is most desirably 30% by weight.

If the content of the inorganic fibers and/or whiskers is less than 3% by weight, the strength of the honeycomb structure will fall. If the content of the inorganic fibers and/or whiskers exceeds 50% by weight, the amount of the inorganic particles which contribute to the improvement in specific surface area will be relatively small, the specific surface area as the honeycomb structure will be too small, and when they are used to support the catalyst component, high dispersion of the catalyst component may not be provided.

It is desirable that the above-mentioned honeycomb units are manufactured using the raw material which is the mixture containing the above-mentioned inorganic particles, the above-mentioned inorganic fibers and/or whiskers, and an inorganic binder. By using the raw material containing the inorganic binder, it is possible to produce the honeycomb unit having a suitably increased strength even if firing is performed at low temperature.

An inorganic sol, a clay base binder, etc. can be used as the above-mentioned inorganic binder. Examples of the above-mentioned inorganic sol may include alumina sol, silica sol, titania sol, water glass, etc. Examples of the clay base binder may include multiple chain structured type clay, such as clay, kaolin, montmorillonite, sepiolite, attapulgite, etc. These may be used solely and may be used in combination of two or more kinds.

Among them, at least one chosen from the group including alumina sol, silica sol, titania sol, water glass, sepiolite, and attapulgite is desirable.

The minimum of the solid content of the inorganic binder contained in the above-mentioned raw material to the total amount of the solid content of the above-mentioned inorganic particles and the above-mentioned inorganic fibers and/or whiskers contained in the raw material is desirably 5% by weight, it is more desirably 10% by weight, and it is most desirably 15% by weight. On the other hand, the maximum of the solid content of the inorganic binder is desirably 50% by weight, it is more desirably 40% by weight, it is most desirably 35% by weight.

If the content of the inorganic binder is less than 5% by weight, the strength of the manufactured honeycomb structure may become low. On the other hand, if the content of the inorganic binder exceeds 50% by weight, the molding characteristic of the above-mentioned raw material will be worsen.

Although the thickness of the cell walls 23 of the honeycomb unit 130 is not limited, the minimum of the thickness of the cell walls 23 is desirably 0.1 mm from a viewpoint of the strength of the cell walls or the honeycomb unit, and the maximum of the thickness of the cell walls 23 is desirably 0.4 mm from a viewpoint of the conversion performance or characteristics.

Next, the method of manufacturing the catalyst carrier of the invention will be explained.

First, extrusion molding is performed using the paste of the raw material which includes as the main ingredients the inorganic particles, the inorganic fibers and/or whiskers, and the inorganic binder mentioned above, so that a honeycomb unit molded body is produced. An organic binder, a dispersion medium, and a molding assist agent may be added to the paste of the raw material in addition to the above-mentioned elements, so as to obtain a suitable moldability.

Although the kind of the organic binder is not limited, examples of the organic binder may include one or more kinds of organic binders chosen from methylcellulose, carboxymethyl cellulose, hydroxyethyl cellulose, polyethylene glycol, etc.

It is preferred that the blending ratio of the organic binder is in a range of 1 to 10 weight part to a total of 100 weight part of the inorganic particles, inorganic fibers and/or whiskers and the inorganic binder.

Although the kind of the dispersion medium is not limited, examples of the dispersion medium may include water, organic solvent (benzene, etc.), alcohol (methanol etc.), etc.

Although the kind of the molding assist agent is not limited, examples of the molding assist agent may include ethylene glycol, dextrin, fatty acid, fatty acid soap, poly alcohol, etc.

Although the kind of the paste of the raw material is not limited, mixing or kneading of the paste is desirable. For example, the paste may be mixed using a mixer, atomizer or the like, or may be kneaded using a kneader or the like.

Although the method of molding the paste of the raw material is not limited, it is preferred to mold the paste of the raw material into the form having cells through extrusion molding, etc.

Moreover, it is preferred to perform drying of the obtained molded body. Although the kind of the drier used for the drying is not limited, examples of the drier may include a microwave drier, a hot air dryer, a dielectric drier, a vacuum dryer, a vacuum dryer, a freeze-drying machine, etc.

It is preferred to perform degreasing of the obtained molded body. Although the degreasing conditions are not limited, they are suitably chosen according to the kind and amount of the organic substances contained in the molded body. It is preferred to perform decreasing of the molded body at 400 degrees C for 2 hours.

It is preferred to perform firing of the obtained molded body. Although the firing conditions are not limited, they are desirably 600-1200 degrees C and they are more desirably 600-1000 degrees C. If the firing temperature is less than 600 degrees C, the sintering of the inorganic particles will not progress and the strength of the honeycomb structure will be too low. If the firing temperature exceeds 1200 degrees C, the sintering of the inorganic particles will progress too much and the specific surface area per unit volume will be too small. Through the above processes, the honeycomb units having the plural cells can be obtained.

Next, after the paste for the adhesive layers is applied to the side of the honeycomb unit by a uniform thickness, other honeycomb units are laminated one by one by using the paste for the adhesive layers. This process is repeated so that a honeycomb structure of a desired size (for example, the honeycomb units are arranged in four rows and four columns) is produced.

Although the kind of the paste for the adhesive layers is not limited, examples of the paste for the adhesive layers may include a mixture of inorganic particles and an inorganic binder, a mixture of inorganic fibers and an inorganic binder, a mixture of inorganic fibers, inorganic particles and an inorganic binder etc.

An organic binder may be added to the above-mentioned paste for the adhesive. Although the kind of the organic binder is not limited, examples of the organic binder may include one or more kinds chosen from polyvinyl alcohol, methylcellulose, ethyl cellulose, carboxymethyl cellulose, etc.

It is preferred that the thickness of the adhesive layer for joining the honeycomb units is in a range of 0.3 to 2 mm. If the thickness of the adhesive layer is less than 0.3 mm, there is a possibility that adequately large junction strength may not be obtained. If the thickness of the adhesive layer exceeds 2 mm, the adhesive layer is a portion which does not function as a catalyst carrier, and the specific surface area per unit volume of the honeycomb structure will fall. Moreover, if the thickness of the adhesive layer exceeds 2 mm, the pressure loss may become large. Moreover, the number of the honeycomb units being joined may be suitably determined according to the size of the honeycomb structure used as the honeycomb catalyst.

Next, the honeycomb structure is heated and the paste for the adhesive layers is dried and solidified, so that the honeycomb units are joined together by forming the adhesive layers.

Next, using a diamond cutter etc., cutting of the honeycomb structure into the cylindrical form is performed and a cylindrical honeycomb structure is produced.

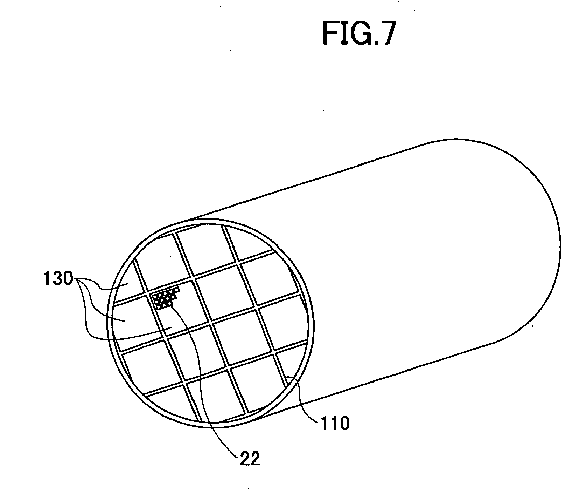

The form of the honeycomb structure may not be limited to the cylindrical form, and it may be a cylindroid, a multiple rectangular pillar, etc. In addition, the honeycomb unit 11 may be molded into the form, as shown in FIG. 7, which is a sector form, a square form or the like in cross-section. And these honeycomb units may be joined together to produce a predetermined form of the honeycomb structure (the cylindrical form in FIG. 7). It is possible to omit cutting and polishing processes in such a case.

Next, the reinforcing rings having the inside diameter that is slightly larger than the outer diameter of the honeycomb structure are disposed in the peripheral portion of the honeycomb structure 250. For example, at least two reinforcing rings with which the width of the reinforcing ring to the full length of the honeycomb structure is in a range of 5% to 25% are disposed so as to surround the periphery of each open end face of the honeycomb structure.

The paste for the coated layer may be applied to the peripheral portion (the side surface) of the honeycomb structure in which the cells are not open, and drying and solidifying of the paste may be performed to form the coated layer.

Although the kind of the paste for the coated layer is not limited, the paste for the coated layer may be the same as the paste for the adhesive layers, or may be different from the latter. The paste for the coated layer may have the blending ratio that is the same as the paste for the adhesive layers, and may have a different blending ratio. The thickness of the coated layer is not limited.

After the honeycomb units are joined together by interposing the adhesive layers (when the coated layer is provided, after the coated layer is formed), it is preferred to perform calcinating. This is because degreasing can be carried out by this calcinating when the organic binder is contained in the paste for the coated layer and the paste for the adhesive layers.

Although the calcinating conditions may be suitably determined according to the kind and amount of the organic substances contained, it is preferred to perform the calcinating at 700 degrees C for 2 hours.

Although the use of the obtained honeycomb structure is not limited, it is preferred to use the honeycomb structure as an exhaust-gas treating device of a vehicle.

It is preferred that this exhaust-gas treating device includes the catalyst carrier of the invention, the holding seal material wound around the catalyst carrier, and the casing accommodating the catalyst carrier around which the holding seal material is wound.

The catalyst carrier of the invention may be configured by supporting the catalyst component on the obtained honeycomb structure to form the honeycomb catalyst.

Although the kind of the catalyst component is not limited, the catalyst component may be made of a noble metal, an alkali metal, an alkaline earth metal, an oxide, etc. Examples of the noble metal may include one or more kinds chosen from platinum, palladium, and rhodium. Examples of the alkali metal may include one or more kinds chosen from potassium, sodium, etc. Examples of the alkaline earth metal may include a barium compound. Examples of the oxide may include perovskite (La_{0.75}K_{0.25}MnO₃, etc.), CeO₂, etc.

Although the use of the obtained honeycomb catalyst is not limited, the honeycomb catalyst may be used as a three-way catalyst or a NOx absorption catalyst for use in the exhaust gas treating of an automotive vehicle.

Although the supporting of the catalyst component is not limited to a specific timing, the catalyst component may be supported after the honeycomb structure is produced, or the catalyst component may be supported in the stage of the inorganic particles of raw material. Although the method of supporting the catalyst component is not limited to a specific method, the catalyst component may be supported through impregnation or the like.

Next, a detailed description will be given of some embodiments of the invention in order to explain the advantageous features of the invention.

### Example 1

The method of manufacturing the catalyst carrier will be explained. First, 1575 weight part of γ-alumina particles (the average particle diameter: 2 micrometers), 675 weight part of zeolite, 680 weight part of aluminum borate whiskers, 2600 weight part of a silica sol (the weight concentration of the solid: 30%), 320 weight part of methylcellulose,_225 weight part of a plasticizer (glycerol), and 290 weight part of a lubricant (unilub) were mixed and kneaded so that the mixed composite was obtained.

Next, extrusion molding for the mixed composite is performed using an extruder so that a molded body of a honeycomb unit was obtained.

Next, the molded body was dried using a microwave drier and a hot air dryer sufficiently, and it was held at 400 degrees C for 2 hours in order for degreasing the molded body.

Thereafter, it was held at 800 degrees C for 2 hours to perform drying of the molded body. And the honeycomb unit which has a generally square cross-section, a cell density of 93 pieces/cm² (600 cpsi), a cell-wall thickness of 0.2 mm, and an overall shape of a rectangular block (37 mm x 37 mm x 150 mm) was obtained.

Next, 29% by weight of γ-alumina particles (the average particle diameter: 2 micrometers), 7% by weight of silica alumina fibers (the mean fiber diameter: 10 micrometers, the mean fiber length: 100 micrometers), 34% by weight of silica sol (the solid concentration: 30% by weight), 5% by weight of carboxymethyl cellulose, and 25% by weight of water were mixed so that a paste for adhesive layer was prepared.

The paste for adhesive layer was applied to the side of the honeycomb units, so that the honeycomb units were joined together, and a honeycomb structure in which the honeycomb units are joined in four rows and four columns was produced. The paste for adhesive layer was uniformly applied to the honeycomb units so that the thickness of the adhesive layers after manufacture is set to 1 mm.

Next, the honeycomb structure was cut into a circular cylindrical form (the diameter: 141.3 mm) using a diamond cutter.

Next, the reinforcing rings were disposed in the peripheral portion of the honeycomb structure. The reinforcing rings used are two reinforcing rings (made of SUS304) which have a full length (width) of 10 mm and a thickness of 0.2 mm. The reinforcing rings were disposed at the ends of the honeycomb structure in the peripheral portion thereof. The arrangement of the reinforcing rings was performed so that the center of each of the reinforcing rings in the thickness direction was located at positions 71.3 mm part from the center of the honeycomb structure.

Next, in order to form a coated layer, the above-mentioned paste for adhesive layer was applied to the cutting surface (the peripheral portion) of the honeycomb structure in this state.

The paste for coated layer was set up so that a sum of a thickness of the coated layer after formation and a thickness of the reinforcing ring is almost uniform in the longitudinal direction of the honeycomb structure.

Next, it was dried at 120 degrees C and held at 700 degrees C for 2 hours to perform degreasing of the adhesive layer and the coated layer.

The thickness of the coated layer (the thickness of the coated layer where the reinforcing ring exists includes the thickness of the reinforcing ring) was 2.5 mm, and it was almost uniform in the longitudinal direction of the honeycomb structure.

After the above-mentioned manufacturing process was carried out, the catalyst carrier of the example 1 (the diameter: 143.8 mm, the length: 150 mm) was obtained. The specific surface area of the honeycomb structure was 40000 m²/L.

### Example 2

This catalyst carrier is manufactured by the same method as in the case of the example 1. However, in the example 2, two reinforcing rings whose thickness is 0.3 mm and whose width is 10 mm were used instead.

Similar to the case of the example 1, the thickness of the coated layer (the thickness of the coated layer where the reinforcing ring exists includes the thickness of the reinforcing ring) was 2.5 mm and it was almost uniform in the longitudinal direction of the honeycomb structure.

### Example 3

This catalyst carrier was manufactured by the same method as in the case of the example 1. However, in the example 3, two reinforcing rings whose thickness is 0.5 mm and whose width is 5 mm were used instead.

Similar to the case of the example 1, the thickness of the coated layer (the thickness of the coated layer where the reinforcing ring exists includes the thickness of the reinforcing ring) was 2.5 mm and it was almost uniform in the longitudinal direction of the honeycomb structure.

### Example 4

This catalyst carrier was manufactured by the same method as in the case of the example 1. However, in the example 4, two reinforcing rings whose thickness is 0.5 mm and whose width is 7.5 mm were used instead.

Similar to the case of the example 1, the thickness of the coated layer (the thickness of the coated layer where the reinforcing ring exists includes the thickness of the reinforcing ring) was 2.5 mm and it was almost uniform in the longitudinal direction of the honeycomb structure.

### Example 5

This catalyst carrier was manufactured by the same method as in the case of the example 1. However, in the example 5, two reinforcing rings whose thickness is 0.5 mm and whose width is 10 mm were used instead.

Similar to the case of the example 1, the thickness of the coated layer (the thickness of the coated layer where the reinforcing ring exists includes the thickness of the reinforcing ring) 2.5 mm and it was almost uniform in the longitudinal direction of the honeycomb structure.

### Example 6

This catalyst carrier was manufactured by the same method as in the case of the example 1. However, in the example 6, two reinforcing rings whose thickness is 0.5 mm and whose width is 15 mm were used instead.

Similar to the case of the example 1, the thickness of the coated layer (the thickness of the coated layer where the reinforcing ring exists includes the thickness of the reinforcing ring) was 2.5 mm and it was almost uniform in the longitudinal direction of the honeycomb structure.

### Example 7

This catalyst carrier was manufactured by the same method as in the case of the example 1. However, in the example 7, two reinforcing rings whose thickness is 0.5 mm and whose width is 30 mm were used instead.

Similar to the case of the example 1, the thickness of the coated layer (the thickness of the coated layer where the reinforcing ring exists includes the thickness of the reinforcing ring) was 2.5 mm and it was almost uniform in the longitudinal direction of the honeycomb structure.

### Example 8

This catalyst carrier was manufactured by the same method as in the case of the example 1. However, in the example 8, two reinforcing rings whose thickness is 0.5 mm and whose width is 35 mm were used instead.

Similar to the case of the example 1, the thickness of the coated layer (the thickness of the coated layer where the reinforcing ring exists includes the thickness of the reinforcing ring) was 2.5 mm and it was almost uniform in the longitudinal direction of the honeycomb structure.

### Example 9

This catalyst carrier was manufactured by the same method as in the case of the example 1. However, in the example 9, two reinforcing rings whose thickness is 1.0 mm and whose width is 10 mm were used instead.

Similar to the case of the example 1, the thickness of the coated layer (the thickness of the coated layer where the reinforcing ring exists includes the thickness of the reinforcing ring) was 2.5 mm and it was almost uniform in the longitudinal direction of the honeycomb structure.

### Example 10

This catalyst carrier was manufactured by the same method as in the case of the example 1. However, in the example 10, two reinforcing rings whose thickness is 1.5 mm and whose width is 10 mm were used instead.

Similar to the case of the example 1, the thickness of the coated layer (the thickness of the coated layer where the reinforcing ring exists includes the thickness of the reinforcing ring) was 2.5 mm and it was almost uniform in the longitudinal direction of the honeycomb structure.

### Example 11

This catalyst carrier was manufactured by the same method as in the case of the example 1. However, in the example 11, two reinforcing rings whose thickness is 2.0 mm and whose width is 10 mm were used instead.

Similar to the case of the example 1, the thickness of the coated layer (the thickness of the coated layer where the reinforcing ring exists includes the thickness of the reinforcing ring) was 2.5 mm and it was almost uniform in the longitudinal direction of the honeycomb structure.

### Example 12

This catalyst carrier was manufactured by the same method as in the case of the example 1. However, in the example 12, two reinforcing rings whose thickness is 2.5 mm and whose width is 10 mm were used instead.

Similar to the case of the example 1, the thickness of the coated layer (the thickness of the coated layer where the reinforcing ring exists includes the thickness of the reinforcing ring) was 2.5 mm and it was almost uniform in the longitudinal direction of the honeycomb structure.

### Example 13

This catalyst carrier was manufactured by the same method as in the case of the example 1. However, in the example 13, the honeycomb unit which has a generally square cross-section, a cell density of 93 pieces/cm² (600 cpsi), a cell-wall thickness of 0.2 mm, and an overall shape of a rectangular block (37 mm x 37 mm x 75 mm) was used instead. And two reinforcing rings whose thickness is 0.5 mm and whose width is 3 mm were used instead.

Similar to the case of the example 1, the thickness of the coated layer (the thickness of the coated layer where the reinforcing ring exists includes the thickness of the reinforcing ring) was 2.5 mm and it was almost uniform in the longitudinal direction of the honeycomb structure. The obtained honeycomb structure had a diameter of 145 mm and a full length of 75 mm.

### Example 14

This catalyst carrier was manufactured by the same method as in the case of the example 13. However, in the example 14, two reinforcing rings whose thickness is 0.5 mm and whose width is 4 mm were used instead.

Similar to the case of the example 13, the thickness of the coated layer (the thickness of the coated layer where the reinforcing ring exists includes the thickness of the reinforcing ring) was 2.5 mm and it was almost uniform in the longitudinal direction of the honeycomb structure.

### Example 15

This catalyst carrier was manufactured by the same method as in the case of the example 13. However, in the example 15, two reinforcing rings whose thickness is 0.5 mm and whose width is 15 mm were used instead.

Similar to the case of the example 13, the thickness of the coated layer (the thickness of the coated layer where the reinforcing ring exists includes the thickness of the reinforcing ring) was 2.5 mm and it was almost uniform in the longitudinal direction of the honeycomb structure.

### Comparative Example 1

This catalyst carrier is manufactured by the same method as in the case of the example 1. However, in the comparative example 1, any reinforcing ring is not used. The thickness of the coated layer was 2.5 mm and it was almost uniform in the longitudinal direction of the honeycomb structure.

The following TABLE 1 collectively shows the relationship between the catalyst carrier's full length, the reinforcing ring's thickness and width, and the ratio of the width of the reinforcing ring to the full length of the catalyst carrier for the respective catalyst carriers of the examples 1 to 15 and the comparative example 1.

**TABLE 1:**

| | TOTAL LENGTH OF CATALYST CARRIER (mm) | REINFORCING RING | | | ISOSTATIC STRENGTH (MPa) |
|---|---|---|---|---|---|
| | | THICKNESS (mm) | WIDTH (mn) | RATIO OF WIDTH OF REINFORCING RING LENGTH OF CATALYST CARRIER (%) | |
| EXAMPLE 1 | 150 | 0.2 | 10 | 6.7 | 1.4 |
| EXAMPLE 2 | 150 | 0.3 | 10 | 6.7 | 20 |
| EXAMPLE 3 | 150 | 0.5 | 5 | 3.3 | 1.4 |
| EXAMPLE 4 | 150 | 0.5 | 7.5 | 5.0 | 20 |
| EXAMPLE 5 | 150 | 0.5 | 10 | 6.7 | 21 |
| EXAMPLE 6 | 150 | 0.5 | 15 | 10.0 | 24 |
| EXAMPLE 7 | 150 | 0.5 | 30 | 20.0 | 26 |
| EXAMPLE 8 | 150 | 0.5 | 35 | 23.3 | 26 |
| EXAMPLE 9 | 150 | 1.0 | 10 | 6.7 | 27 |
| EXAMPLE 10 | 150 | 1.5 | 10 | 6.7 | 3.1 |
| EXAMPLE 11 | 150 | 20 | 10 | 6.7 | 3.4 |
| EXAMPLE 12 | 150 | 25 | 10 | 6.7 | 3.4 |
| EXAMPLE 13 | 75 | 0.5 | 3 | 4.0 | 1.5 |
| EXAMPLE 14 | 75 | 0.5 | 4 | 5.3 | 20 |
| EXAMPLE 15 | 75 | 0.5 | 15 | 20.0 | 25 |
| CONPARATIVE EXAMPLE 1 | 150 | - | - | 0 | 1.3 |

### Measurement of Isostatic Strength

The isostatic strength was measured for each of the respective catalyst carriers of the examples 1 to 15 and the comparative example 1 which were manufactured as mentioned above. The isostatic strength means a compression breaking load at which the rupture takes place when the isotropic hydrostatic pressure load is applied to a catalyst carrier, and it is specified by the standard practice JASO M505-87 issued by the Society of Automotive Engineers of Japan.

Specifically, the isostatic strength was measured as follows. Metal plates (aluminum plate, the thickness: 15 mm) are disposed on both the open end faces of the catalyst carrier. Next, the catalyst carrier and the metal plates are wrapped by a polyurethane rubber sheet (the thickness: 2 mm), and they are sealed. Next, the sealed object is made completely immersed into the container that contains water. In this state, the water pressure is raised, and a water pressure at which the rupture of the catalyst carrier takes place is measured.

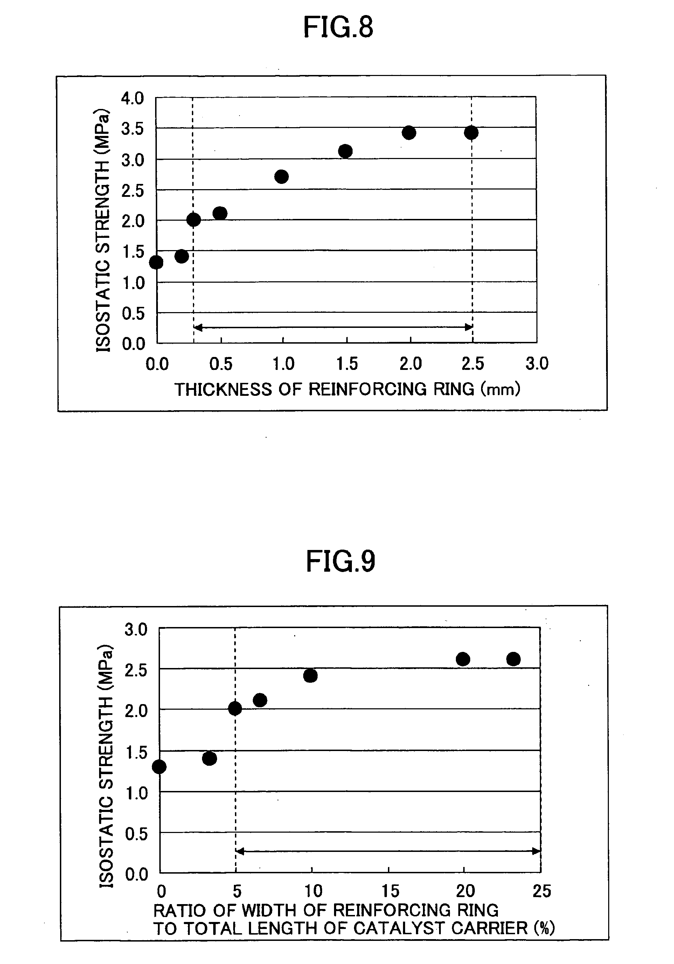

The results of the isostatic strength obtained for the respective catalyst carriers are collectively shown in.TABLE 1. FIG. 8 is a diagram for explaining the relationship between the isostatic strength and the thickness of the reinforcing ring when the ratio of the width of the reinforcing ring to the full length of the catalyst carrier is constant (= 6.7%). FIG. 9 is a diagram for explaining the relationship between the isostatic strength and the ratio of the width of the reinforcing ring to the full length of the catalyst carrier when the thickness of the reinforcing ring is constant (= 0.5 mm).

It is apparent from TABLE 1 that the catalyst carriers of the examples 1 to 15 including the reinforcing rings have an increased isostatic strength which is larger than that of the catalyst carrier of the comparative example 1 which does not include any reinforcing ring.

It is apparent from FIG. 8 that the isostatic strength increases as the thickness of the reinforcing ring becomes large. In particular, a very good isostatic strength can be obtained when the thickness of the reinforcing ring is in a range of 0.3 to 2.5 mm.

It is apparent from FIG. 9 that the isostatic strength increases as the ratio of the width of the reinforcing ring to the full length of the catalyst carrier becomes large. In particular, a very good isostatic strength can be obtained when the ratio of the width of the reinforcing ring to the full length of the catalyst carrier is in a range of 5% to 23%.

Accordingly, the catalyst carriers in the above embodiments of the invention can provide an increased specific surface area as well as an increased isostatic strength.

## Claims

1. A catalyst carrier including a honeycomb structure having two end faces and a peripheral portion connecting the end faces to each other and in which cells extending between the end faces are separated by cell walls, the catalyst carrier comprising:
a coated layer disposed on the peripheral portion throughout a full length of the honeycomb structure; and
a reinforcing member disposed on the peripheral portion of the honeycomb structure, wherein the reinforcing member has two reinforcing rings, the reinforcing rings being disposed to surround the periphery of each of the end faces of the honeycomb structure respectively.

2. The catalyst carrier according to claim 1, wherein the honeycomb structure contains inorganic particles, and further contains inorganic fibers and/or whiskers.

3. The catalyst carrier according to claim 1 or 2, wherein a ratio of a width of each reinforcing ring to the full length of the honeycomb structure is in a range of 5% to 25%.

4. The catalyst carrier according to any of claims 1 to 3, wherein a thickness of each reinforcing ring is in a range of 0.3 to 2.5 mm.

5. The catalyst carrier according to any of claims 1 to 4, wherein each reinforcing ring is made of either a stainless steel or a nickel base alloy.

6. The catalyst carrier according to any of claims 1 to 5, wherein a sum of a thickness of the coated layer and a thickness of each reinforcing ring is substantially uniform in the longitudinal direction of the honeycomb structure.

7. The catalyst carrier according to any of claims 1 to 6, wherein a thickness of each cell wall is in a range of 0.1 to 0.4 mm.

8. The catalyst carrier according to any of claims 1 to 7, wherein a specific surface area of the honeycomb structure is in a range of 25000 to 70000 m²/L per unit volume of the catalyst carrier.

9. The catalyst carrier according to any of claims 1 to 8, wherein the honeycomb structure includes a plurality of honeycomb units and a plurality of adhesive layers joining the plurality of honeycomb units respectively.

10. The catalyst carrier according to any of claims 1 to 9, wherein the catalyst carrier has a catalyst of a noble metal supported therein.

11. The catalyst carrier according to any of claims 1 to 10, wherein the reinforcing rings are disposed in any of positions inside the coated layer, internal positions of the coated layer, and positions outside the coated layer.

12. An exhaust-gas treating device comprising:
a catalyst carrier according to any of the preceding claims;
a holding seal material which is wound around the catalyst carrier; and
a casing in which the catalyst carrier around which the holding seal material is wound is accommodated.
